# FASCICULE DE BREVET EUROPEEN

(11) **EP 3 384 814 B1**
(45) Date de publication et mention de la délivrance du brevet: **19.02.2020**
(21) Numéro de dépôt: 18170923.9
(22) Date de dépôt: 10.12.2014
(51) Int. Cl.: A47J 27/04, A47J 27/00, A47J 27/58, A47J 37/06

(54) **APPAREIL ÉLECTRIQUE DE CHAUFFAGE ET/OU DE CUISSON D'ALIMENTS À LA VAPEUR**
ELEKTROGERÄT ZUM AUFWÄRMEN UND/ODER KOCHEN VON LEBENSMITTELN MIT DAMPF
ELECTRICAL DEVICE FOR HEATING AND/OR COOKING FOOD WITH STEAM

(30) Priorité: 13.12.2013 FR 1362545
(43) Date de publication de la demande: 10.10.2018
(62) Demande divisionnaire de: 14827489.7
(73) Titulaire: SEB S.A., 69130 Ecully (FR)
(72) Inventeur: BLOND, Laurent, 21200 BEAUNE (FR)
(74) Mandataire: Bourrières, Patrice

(56) Documents cités:
- EP-A1- 1 651 084
- WO-A1-2004/037055
- CA-A1- 1 199 191

## Description

La présente invention concerne le domaine technique des appareils pour cuire et/ou chauffer des aliments en utilisant de la vapeur.

La présente invention concerne plus particulièrement les appareils dans lesquels le contact des aliments avec la vapeur est limité ou évité.

Il est connu du document EP 1 651 084 un appareil pour cuire et/ou chauffer des aliments, comportant une enceinte comprenant un réceptacle et un couvercle, et un dispositif de production de vapeur. Le couvercle est monté pivotant par rapport au réceptacle. Un tel appareil est simple à utiliser. Toutefois la vapeur issue du dispositif de production de vapeur est injectée dans l'enceinte. Cette disposition présente l'inconvénient de lessiver certains aliments lors de la cuisson et d'entraîner une partie des nutriments.

Un objet de la présente invention est de proposer un appareil pour cuire et/ou chauffer des aliments en utilisant de la vapeur, qui favorise la conservation des vitamines et des minéraux, ainsi que la préservation du goût des aliments.

Un autre objet de la présente invention est de proposer un appareil pour cuire et/ou chauffer des aliments en utilisant de la vapeur, qui soit simple à utiliser.

Un autre objet de la présente invention est de proposer un appareil pour cuire et/ou chauffer des aliments en utilisant de la vapeur, qui permette de cuire et/ou chauffer des aliments rapidement.

Un autre objet de la présente invention est de proposer un appareil pour cuire et/ou chauffer des aliments en utilisant de la vapeur, qui permette de préparer des sauces et/ou des plats en sauce.

Un autre objet de la présente invention est de proposer un appareil pour cuire et/ou chauffer des aliments en utilisant de la vapeur, dans lequel la réalisation de plusieurs plats successifs est facilitée.

Un autre objet de la présente invention est de proposer un appareil pour cuire et/ou chauffer des aliments en utilisant de la vapeur, dans lequel l'écrasement des aliments est limité ou évité.

Ces objets sont atteints avec un appareil pour cuire et/ou chauffer des aliments, comportant une enceinte comprenant un réceptacle et un couvercle, et un dispositif de production de vapeur, du fait que le couvercle porte une chambre d'expansion de vapeur alimentée en vapeur par le dispositif de production de vapeur, que la chambre d'expansion de vapeur comporte une paroi de confinement délimitant une partie de l'enceinte, et que la paroi de confinement
est mobile par rapport au réceptacle lorsque le couvercle ferme l'enceinte. L'appareil comporte aussi une pompe utilisée pour gonfler la chambre d'expansion de vapeur et/ou pour aspirer l'air présent dans l'enceinte. La paroi de confinement mobile en contact avec la vapeur présente dans la chambre d'expansion de vapeur peut venir au contact des aliments et les chauffer par conduction. Un chauffage ou une cuisson à l'étouffée peuvent ainsi être obtenus. La réduction du volume de l'enceinte au profit de la chambre d'expansion de vapeur permet de chauffer et/ou de cuire les aliments plus rapidement qu'avec une enceinte de dimensions figées. Des sauces et/ou des plats en sauce peuvent être plus facilement réalisés. Le lessivage des aliments par la vapeur peut être évité. L'appareil est simple à utiliser et ne nécessite pas de consommables tels que des sachets de cuisson jetables ni l'utilisation de sachets de cuisson, ou poches souples de cuisson réutilisables.

Selon un mode de réalisation avantageux, la paroi de confinement est au moins partiellement réalisée en matériau souple élastiquement déformable. Cette disposition permet de faciliter l'ajustement du volume de l'enceinte aux aliments présents dans le réceptacle. Cette disposition contribue également à améliorer les performances des échanges thermiques entre la vapeur et les aliments. En alternative, la paroi de confinement peut notamment comporter au moins une partie rigide reliée au couvercle par une partie déformable telle que par exemple un soufflet annulaire entourant ladite partie rigide.

Avantageusement alors, la paroi de confinement présente une position de repos au moins partiellement rentrée à l'intérieur du couvercle. Cette disposition permet d'obtenir une enceinte de volume plus important tout en conservant une construction compacte.

Selon une forme de réalisation avantageuse, le réceptacle porte un support ajouré amovible et présente un espace de récupération de jus agencé en dessous d'une partie ajourée du support ajouré. Cette disposition permet de recueillir les jus de cuisson s'écoulant hors des aliments.

Avantageusement encore, le couvercle porte une bague d'étanchéité prenant appui sur une bordure supérieure du réceptacle. Cette disposition permet de limiter les pertes thermiques hors de l'enceinte avec une construction simple. En alternative, une bague d'étanchéité peut notamment être ménagée ou rapportée sur le réceptacle.

Avantageusement encore, le réceptacle est porté par un corps principal. Cette disposition permet de simplifier la construction de l'appareil.

Avantageusement alors, le réceptacle est amovible par rapport au corps principal. Cette disposition permet de simplifier l'utilisation de l'appareil.

Avantageusement encore, le couvercle est monté mobile par rapport au corps principal entre une position relevée pour la mise en place des aliments dans le réceptacle ou le retrait des aliments du réceptacle et une position abaissée pour cuire et/ou chauffer les aliments disposés dans le réceptacle. Cette disposition permet de simplifier la construction et l'utilisation de l'appareil.

Avantageusement encore, le dispositif de production de vapeur est agencé dans le corps principal. Cette disposition permet de faciliter la manipulation du couvercle. Cette disposition contribue aussi à simplifier la construction de l'appareil.

Selon une forme de réalisation, le dispositif de production de vapeur comporte un réservoir d'eau associé à un élément chauffant. Une telle construction est particulièrement économique. Avantageusement alors, l'élément chauffant est entouré par une portion annulaire du fond du réservoir d'eau. Cette disposition permet de simplifier la construction de l'appareil. En alternative, le dispositif de production de vapeur pourrait notamment comporter un générateur de vapeur alimenté en eau à partir d'un réservoir d'eau par une pompe.

Avantageusement alors, le fond du réceptacle présente une partie surélevée s'étendant au dessus de l'élément chauffant. Cette disposition permet d'envisager de recueillir les aliments liquides, notamment les jus de cuisson, dans une zone du réceptacle non directement exposée à la chaleur du flux de vapeur issu du dispositif de production de vapeur.

Avantageusement encore, le support ajouré présente une partie non ajourée agencée au dessus de l'élément chauffant. Cette disposition permet d'éviter les écoulements de liquide sur la zone du réceptacle directement exposée à la chaleur du flux de vapeur issu du dispositif de production de vapeur.

Avantageusement encore, l'enceinte comporte au moins une ouverture d'admission communiquant avec le dispositif de production de vapeur pour injecter de la vapeur dans l'enceinte. Cette disposition permet d'obtenir une élévation plus rapide de la température des aliments présents dans l'enceinte, en injectant de la vapeur dans l'enceinte au début de la chauffe et/ou de la cuisson des aliments, pour les saturer en vapeur.

Avantageusement alors, la ou les ouvertures d'admission sont agencées dans le réceptacle. Cette disposition permet d'obtenir une construction particulièrement simple.

Avantageusement encore, la paroi de confinement déplacée par la vapeur présente dans la chambre d'expansion de vapeur peut occuper au moins une position obturant la ou les ouvertures d'admission. Cette disposition permet d'injecter de la vapeur dans l'enceinte pendant une période limitée, tout en conservant une construction simple de l'appareil.

Avantageusement encore, l'enceinte comporte au moins une ouverture d'évacuation communiquant avec l'extérieur de l'appareil. Cette disposition permet notamment d'expulser l'air présent dans l'enceinte lorsque de la vapeur est admise dans l'enceinte. L'expulsion de l'air hors de l'enceinte contribue également à accélérer la chauffe et/ou la cuisson des aliments présents dans l'enceinte. L'expulsion de l'air, et donc de l'oxygène, hors de l'enceinte contribue aussi à limiter l'oxydation des nutriments sensibles.

Avantageusement alors, la ou les ouvertures d'évacuation sont agencées dans la bague d'étanchéité. Cette disposition permet d'obtenir une construction particulièrement simple.

Avantageusement encore, la paroi de confinement déplacée par la vapeur présente dans la chambre d'expansion de vapeur peut occuper au moins une position obturant la ou les ouvertures d'évacuation. Ainsi le confinement de l'enceinte contenant les aliments peut être simplement obtenu par le remplissage de la chambre d'expansion de vapeur, après l'expulsion de l'air. Cette disposition permet de simplifier la construction de l'appareil.

Avantageusement encore, l'appareil comporte des moyens de commande pour piloter la production de vapeur du dispositif de production de vapeur en fonction de la pression de vapeur régnant dans la chambre d'expansion de vapeur. Cette disposition permet de limiter l'écrasement des aliments.

L'invention sera mieux comprise à l'étude d'un exemple de réalisation, pris à titre nullement limitatif, illustré dans les figures 1 à 11 annexées, dans lesquelles :
- la figure 1 est une vue en perspective et en coupe partielle d'un exemple de réalisation d'un appareil pour cuire et/ou chauffer les aliments selon l'invention, dans laquelle l'enceinte pour recevoir les aliments à cuire et/ou à chauffer est en configuration fermée,
- la figure 2 est une vue en perspective d'un support ajouré utilisé avec un réceptacle appartenant à l'appareil illustré sur la figure 1,
- la figure 3 est une vue en perspective et en coupe du support ajouré et du réceptacle illustrés sur la figure 2, avec une partie agrandie,
- la figure 4 est une vue en perspective avant de l'appareil illustré sur la figure 1, dans laquelle l'enceinte pour recevoir les aliments à cuire et/ou à chauffer est en configuration ouverte, le réceptacle illustré sur les figures 2 et 3 ayant été retiré,
- la figure 5 est une vue en perspective arrière de l'appareil illustré sur la figure 4, dans laquelle un élément de boîtier a été retiré pour montrer une partie de la circulation de la vapeur,
- la figure 6 est une vue en perspective avant de l'appareil illustré sur la figure 4, dans laquelle le réceptacle illustré sur les figures 2 et 3 est en place, montrant l'injection de vapeur dans l'enceinte,
- la figure 7 est un schéma comparatif montrant la montée en température dans l'enceinte, avec injection de vapeur et sans injection de vapeur,
- la figure 8 est une vue partielle en perspective arrière de l'appareil illustré sur la figure 1, montrant des ouvertures d'évacuation d'air,
- la figure 9 est un schéma comparatif montrant la montée en température dans l'enceinte, avec évacuation de l'air et sans évacuation de l'air,
- la figure 10 est une vue en coupe et en élévation de l'appareil illustré sur la figure 1, montrant une paroi de confinement de l'appareil en configuration de repos,
- la figure 11 est une vue en coupe et en élévation de l'appareil illustré sur la figure 1, montrant la paroi de confinement de l'appareil en configuration de travail sous l'action de la vapeur.

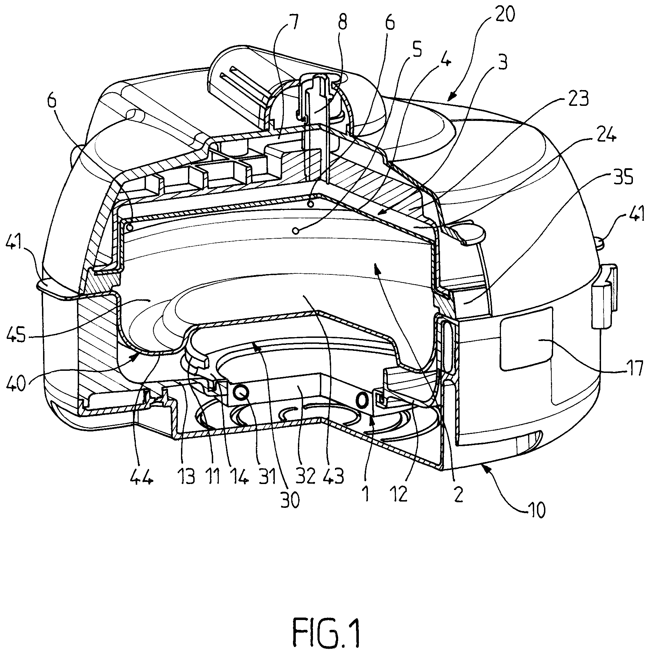

L'appareil pour cuire et/ou chauffer des aliments illustré sur la figure 1 comporte un dispositif de production de vapeur 1 et une enceinte 2 pour recevoir les aliments à cuire et/ou à chauffer.

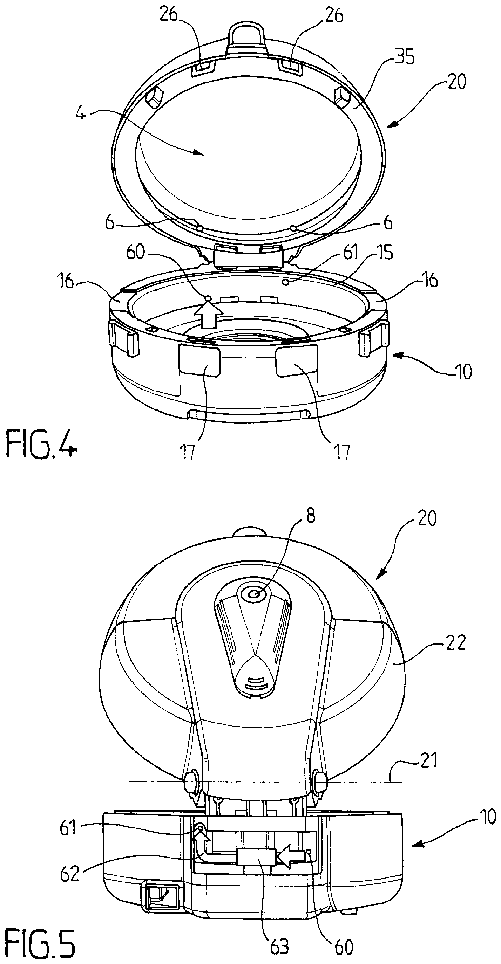

L'enceinte 2 peut présenter une configuration fermée, pour cuire et/ou chauffer les aliments, représentée sur la figure 1, et une configuration ouverte, représentée sur les figures 4, 5 et 6, dans laquelle les aliments peuvent être mis en place ou retirés.

Dans l'exemple de réalisation illustré sur les figures, l'enceinte 2 est formée entre un réceptacle 40 et un couvercle 20. Le réceptacle 40 est prévu pour recevoir les aliments à cuire et/ou à chauffer. De préférence, le réceptacle 40 est amovible, pour permettre un service à table.

Dans l'exemple de réalisation illustré sur les figures, le couvercle 20 est monté mobile sur un corps principal 10. Le couvercle 20 est par exemple monté pivotant sur le corps principal 10 selon un axe 21 sensiblement horizontal, tel que représenté sur la figure 5.

Le dispositif de production de vapeur 1 comporte un réservoir d'eau 30 associé à un élément chauffant 31.

Dans l'exemple de réalisation illustré sur les figures, le dispositif de production de vapeur 1 est agencé en dessous de l'enceinte 2. Le dispositif de production de vapeur 1 est agencé dans le corps principal 10. Le réservoir d'eau 30 est délimité par une nervure annulaire 11 ménagée sur un fond 12 d'une cuve interne 13 du corps principal 10. L'élément chauffant 31 est intégré à une plaque de chauffe 32. L'élément chauffant 31 et la plaque de chauffe 32 peuvent appartenir à un fond chauffant utilisé dans les bouilloires. L'élément chauffant 31 peut par exemple présenter une puissance de 2000 W. La plaque de chauffe 32 est entourée par la nervure annulaire 11. Un joint annulaire 14 est interposé entre la plaque de chauffe 32 et la nervure annulaire 11. La plaque de chauffe 32 forme ainsi la majeure partie du fond du réservoir d'eau 30.

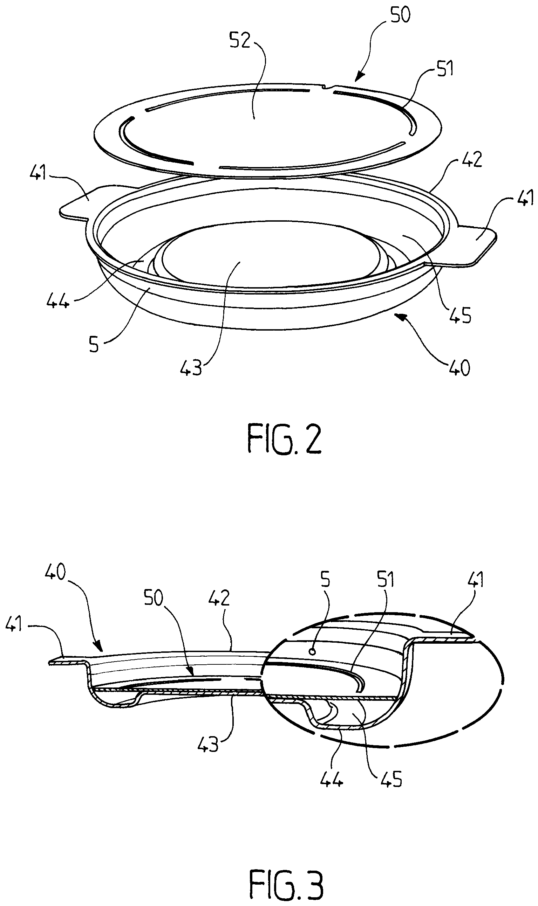

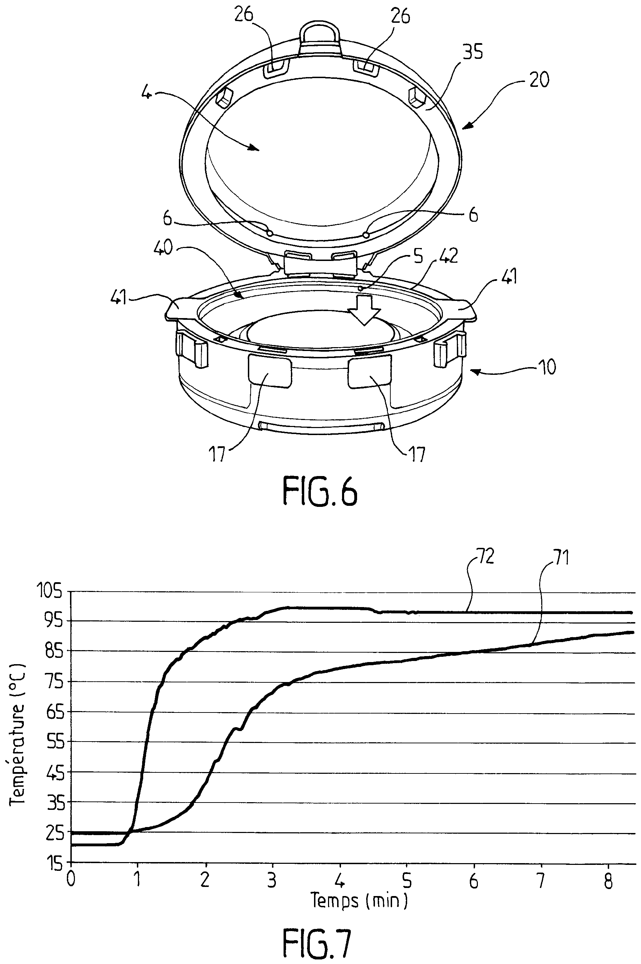

Tel que représenté sur la figure 2, le réceptacle 40 comporte deux poignées 41 agencées de manière opposée. Les poignées 41 sont issues d'une bordure supérieure 42 du réceptacle 40. Tel que visible sur la figure 6, les poignées 41 s'étendent à l'extérieur de l'appareil. Les poignées 41 s'étendent entre le corps principal 10 et le couvercle 20. Cette disposition facilite l'obtention de poignées froides. En alternative ou en complément, le réceptacle 40 et/ou les poignées 41 peuvent être réalisés en matériau peu conducteur de chaleur, par exemple en matière plastique ou en acier inoxydable.

De préférence, le réceptacle 40 comporte au moins un espace de récupération de jus 45. Tel que visible sur les figures 2 et 3, le fond du réceptacle 40 présente une partie surélevée 43. Une gorge annulaire périphérique 44 entoure la partie surélevée 43 du fond du réceptacle 40 et forme l'espace de récupération de jus 45.

Tel que représenté sur la figure 1, le réceptacle 40 est ajusté dans le corps principal 10. La bordure supérieure 42 du réceptacle 40 repose sur un rebord interne 15 du corps principal 10, mieux visible sur la figure 4. Ainsi l'espace entre le réceptacle 40 et le corps principal 10 reste confiné. Le rebord interne 15 du corps principal 10 est prolongé par des échancrures 16 prévues pour le passage des poignées 41 du réceptacle 40.

La figure 2 montre aussi un support ajouré 50 prévu pour être utilisé avec le réceptacle 40. Tel que représenté sur la figure 3, le réceptacle 40 porte le support ajouré 50 amovible. L'espace de récupération de jus 45 est agencé en dessous d'une partie ajourée 51 du support ajouré 50.

Le support ajouré 50 repose sur la partie surélevée 43 du réceptacle 40 et s'étend au dessus de la gorge annulaire périphérique 44. Le support ajouré 50 comporte une partie ajourée 51 agencée au dessus de la gorge annulaire périphérique 44 formant l'espace de récupération de jus 45. Le support ajouré 50 comporte une partie non ajourée 52 agencée au dessus de la partie surélevée 43 du fond du réceptacle 40. Ainsi l'espace de récupération de jus 45 est annulaire et s'étend autour de la partie surélevée 43 du fond du réceptacle 40 exposée au flux de vapeur issu du dispositif de production de vapeur 1.

Tel que visible sur la figure 1, le réceptacle 40 est porté par le corps principal 10. Le réceptacle 40 est monté amovible par rapport au corps principal 10. La partie surélevée 43 du fond du réceptacle 40 s'étend au dessus de l'élément chauffant 31. Ainsi la partie non ajourée 52 du support ajouré 50 est agencée au dessus de l'élément chauffant 31 et du réservoir d'eau 30.

Dans l'exemple de réalisation illustré sur les figures, le couvercle 20 est monté mobile par rapport au corps principal 10 entre une position relevée pour la mise en place des aliments dans le réceptacle 40 et/ou le retrait des aliments du réceptacle 40, illustrée sur les figures 4, 5 et 6 et une position abaissée pour cuire et/ou chauffer les aliments disposés dans le réceptacle 40, illustrée sur la figure 1. Le corps principal 10 comporte à cet effet au moins un organe de déverrouillage 17 associé à un organe d'accrochage (non représenté sur les figures), prévu pour venir avec un organe de retenue 26 appartenant au couvercle 20.

L'appareil pour cuire et/ou chauffer des aliments comporte une chambre d'expansion de vapeur 3 alimentée en vapeur par le dispositif de production de vapeur 1. La chambre d'expansion de vapeur 3 est adjacente à l'enceinte 2.

Dans l'exemple de réalisation illustré sur les figures, la chambre d'expansion de vapeur 3 est agencée au dessus de l'enceinte 2. Plus particulièrement, la chambre d'expansion de vapeur 3 est agencée dans le couvercle 20. En d'autres termes, le couvercle 20 porte la chambre d'expansion de vapeur 3.

La chambre d'expansion de vapeur 3 comporte une paroi de confinement 4 délimitant partiellement l'enceinte 2. La paroi de confinement 4 est déformable et/ou mobile.

Par ailleurs, dans l'exemple de réalisation illustré sur les figures, l'enceinte 2 est délimitée partiellement par le réceptacle 40 amovible.

Dans l'exemple de réalisation illustré sur les figures, le couvercle 20 comporte une coque extérieure 22 avantageusement articulée sur le corps principal 10, ainsi qu'une coque inférieure 23 ménageant une cavité 24 présentant une ouverture inférieure. La paroi de confinement 4 est portée par le couvercle 20. La paroi de confinement 4 est agencée sous la coque inférieure 23 et délimite ainsi avec la coque inférieure 23 la chambre d'expansion de vapeur 3. La paroi de confinement 4 est agencée au dessus du réceptacle 40. Le couvercle 20 porte une bague d'étanchéité 35 prenant appui sur une bordure supérieure 42 du réceptacle 40. Ainsi la bague d'étanchéité 35 appartient à une partie de l'enceinte 2 mobile par rapport au réceptacle 40. La périphérie de la paroi de confinement 4 est insérée entre la bague d'étanchéité 35 et le couvercle 20. L'enceinte 2 est ainsi délimitée par le réceptacle 40, la bague d'étanchéité 35 et la paroi de confinement 4. La paroi de confinement 4 est mobile par rapport au réceptacle 40 lorsque le couvercle ferme l'enceinte 2.

Selon une forme de réalisation préférée illustrée sur les figures, la paroi de confinement 4 se présente sous la forme d'une feuille de matériau souple élastiquement déformable. La paroi de confinement 4 est avantageusement réalisée en FEP (copolymère éthylène-propylène fluoré, ou tetrafluorethylène-perfluorpropylène), ce matériau présentant l'avantage d'être moins sensible à l'imprégnation des odeurs des aliments que les silicones.

Tel que visible sur la figure 1, la paroi de confinement 4 présente une position de repos au moins partiellement rentrée à l'intérieur du couvercle 20. Ainsi la paroi de confinement 4 présente une position de repos au moins partiellement concave par rapport à l'enceinte 2.

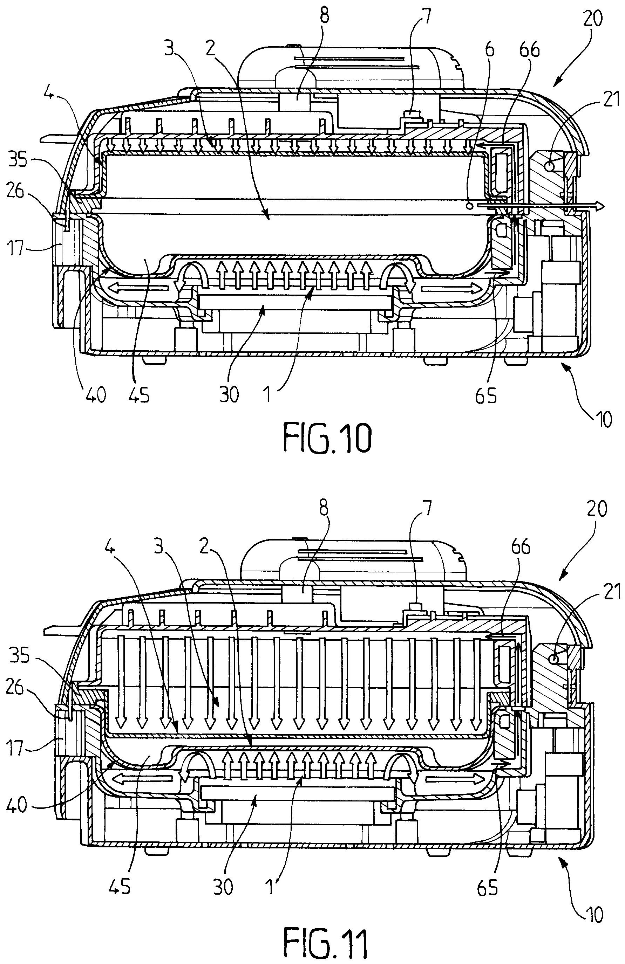

Dans l'exemple de réalisation illustré sur les figures, la chambre d'expansion de vapeur 3 est alimentée en vapeur depuis le dispositif de production de vapeur 1 par au moins un premier conduit 65 ménagé dans le corps principal 10, reliant une partie inférieure du corps principal 10 en dessous du réceptacle 40 à une partie supérieure du corps principal 10 à l'extérieur du rebord interne 15 du corps principal 10 portant le réceptacle 40, ledit premier conduit 65 étant relié à un second conduit 66 ménagé dans le couvercle 20, reliant une partie inférieure du couvercle 20 à l'extérieur de la paroi de confinement 4 à une face interne du couvercle 20 à l'intérieur de la paroi de confinement 4, tel que visible sur les figures 10 et 11.

Selon une forme de réalisation préférée, l'enceinte 2 comporte au moins une ouverture d'admission 5 communiquant avec le dispositif de production de vapeur 1 pour injecter de la vapeur dans l'enceinte 2. Des essais illustrés sur la figure 7 montrent que la montée en température dans l'enceinte 2 est plus rapide lorsque de la vapeur est admise dans l'enceinte 2, qu'en l'absence de vapeur admise dans l'enceinte 2 (pour atteindre 100°C, 3 min contre 8 min). La courbe 71 représente l'évolution de température dans l'enceinte 2 en l'absence de vapeur. La courbe 72 représente une évolution dans l'enceinte 2 lorsque de la vapeur est admise dans l'enceinte 2.

Dans l'exemple de réalisation illustré sur les figures, la ou les ouvertures d'admission 5 sont agencées dans le réceptacle 40. Tel que représenté sur la figure 3, une ouverture d'admission 5 est agencée au dessus du support ajouré 50. Tel que visible sur les figures 4 et 5, le corps principal 10 présente une ouverture latérale inférieure 60 agencée en dessous du réceptacle 40 et une ouverture latérale supérieure 61 agencée en regard de l'ouverture d'admission 5 agencée dans le réceptacle 40. L'ouverture latérale inférieure 60 est reliée à l'ouverture latérale supérieure 61 par un conduit de transfert 62 agencé dans la paroi interne du corps principal 10, tel que représenté schématiquement sur la figure 5.

Pour éviter de lessiver les aliments avec la vapeur, la ou les ouvertures d'admission 5 peuvent être obturées par la paroi de confinement 4 lorsque la chambre d'expansion de vapeur 3 est alimentée en vapeur par le dispositif de production de vapeur 1. Ainsi la paroi de confinement 4 déplacée par la vapeur présente dans la chambre d'expansion de vapeur 3 peut occuper au moins une position obturant la ou les ouvertures d'admission 5.

A titre de variante, le conduit de transfert 62 peut comporter une électrovanne 63 pour piloter l'admission de vapeur dans l'enceinte 2 indépendamment de l'admission de vapeur dans la chambre d'expansion de vapeur 3, tel que représenté sur la figure 5.

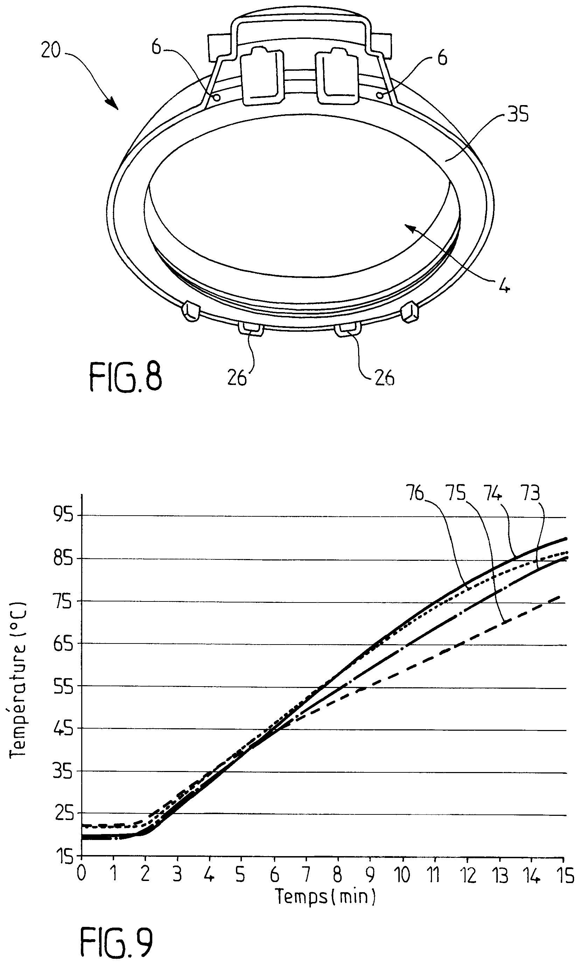

Selon une forme de réalisation préférée, l'enceinte 2 comporte au moins une ouverture d'évacuation 6 communiquant avec l'extérieur de l'appareil. Des essais illustrés sur la figure 9 montrent que la montée en température des aliments est plus rapide si l'air est expulsé de l'enceinte 2. Les courbes 73 et 74 représentent l'évolution de température dans un aliment lorsque l'air est expulsé de l'enceinte 2. Les courbes 75 et 76 représentent l'évolution de température dans un aliment en l'absence d'expulsion de l'air de l'enceinte 2.

Pour éviter les fuites thermiques après que l'air a été chassé de l'enceinte 2, la ou les ouvertures d'évacuation 6 peuvent être obturées par la paroi de confinement 4 lorsque la chambre d'expansion de vapeur 3 est alimentée en vapeur par le dispositif de production de vapeur 1. Ainsi la paroi de confinement 4 déplacée par la vapeur présente dans la chambre d'expansion de vapeur 3 peut occuper au moins une position obturant la ou les ouvertures d'évacuation 6.

Dans l'exemple de réalisation illustré sur les figures, la ou les ouvertures d'évacuation 6 sont ménagées dans la bague d'étanchéité 35. La figure 8 montre deux ouvertures d'évacuation 6 ménagées dans la bague d'étanchéité 35 au niveau de l'articulation du couvercle 20.

La figure 10 montre une ouverture d'évacuation 6, communiquant avec l'extérieur de l'appareil. Dans la configuration de la figure 11, la paroi de confinement 4 s'étend dans le réceptacle 40 et obture la ou les ouvertures d'amission 5 ainsi que la ou les ouvertures d'évacuation 6 (non visibles sur la figure 11). Le support ajouré 50 n'est pas représenté sur les figures 10 et 11, mais peut être mis en place dans le réceptacle 40 si désiré.

L'appareil comporte des moyens de commande 7 pour piloter la production de vapeur du dispositif de production de vapeur 1 en fonction de la pression de vapeur régnant dans la chambre d'expansion de vapeur 3.

Dans l'exemple de réalisation illustré sur les figures, les moyens de commande 7 comprennent un pressostat basse pression mesurant la pression dans la chambre d'expansion de vapeur 3. Le pressostat est couplé à un contacteur pour piloter l'alimentation électrique de l'élément chauffant 31. Le pressostat présente un seuil haut, par exemple 4 mbar, et un seuil bas, par exemple 2,5 mbar. Tant que la pression dans la chambre d'expansion de vapeur 3 reste inférieure au seuil haut, l'élément chauffant 31 est alimenté électriquement. Si la pression dans la chambre d'expansion de vapeur 3 dépasse le seuil haut, l'alimentation électrique de l'élément chauffant 31 est interrompue. L'alimentation électrique de l'élément chauffant 31 reste interrompue tant que la pression dans la chambre d'expansion de vapeur 3 reste supérieure au seuil bas. Si la pression dans la chambre d'expansion de vapeur 3 retombe en dessous du seuil bas, l'élément chauffant 31 est alimenté électriquement de nouveau.

A titre de variante, les moyens de commande 7 peuvent notamment comprendre un capteur de température agencé pour mesurer la température à l'intérieur de la chambre d'expansion de vapeur 3, afin de piloter l'alimentation électrique de l'élément chauffant 31 et/ou de piloter une électrovanne pour réguler la pression à l'intérieur de la chambre d'expansion de vapeur 3.

Une soupape de sécurité 8 peut être prévue pour mettre en communication la chambre d'expansion de vapeur 3 avec l'extérieur en cas de surpression. Dans l'exemple de réalisation illustré sur les figures, la soupape de sécurité 8 est montée sur le couvercle 20.

L'appareil selon l'invention fonctionne et s'utilise de la manière suivante :
L'utilisateur soulève le couvercle 20 pour remplir le réservoir d'eau 30 et placer les aliments dans l'enceinte 2. L'utilisateur peut disposer les aliments dans le réceptacle 40 en place dans l'enceinte 2. L'utilisateur peut aussi placer dans l'enceinte 2 le réceptacle 40 contenant les aliments. Si désiré l'utilisateur peut placer les aliments sur le support ajouré 50 disposé dans le réceptacle 40.

Après avoir refermé l'enceinte 2 en rabaissant le couvercle 20, l'utilisateur peut mettre en fonctionnement l'appareil. L'élément chauffant 31 est alors alimenté électriquement. Le dispositif de production de vapeur 1 commence à produire de la vapeur qui se dirige dans la chambre d'expansion de vapeur 3 d'une part, et dans l'enceinte 2 par la ou les ouvertures d'amission 5. La vapeur remplit progressivement la chambre d'expansion de vapeur 3. La vapeur présente dans la chambre d'expansion de vapeur 3 tend à déformer la paroi de confinement 4 vers l'enceinte 2. La vapeur admise dans l'enceinte 2 par la ou les ouvertures d'admission 5 tend à chasser l'air présent dans l'enceinte 2 par la ou les ouvertures d'évacuation 6, tel que visible sur la figure 10. La paroi de confinement 4 déformée vers l'enceinte 2 obture d'abord la ou les ouvertures d'évacuation 6, en atteignant la bague d'étanchéité 35. La paroi de confinement 4 déformée vers l'enceinte 2 obture ensuite la ou les ouvertures d'admission 5, en atteignant la portion supérieure du réceptacle 40. La paroi de confinement 4 déformée vers l'enceinte 2 vient envelopper la partie supérieure des aliments placés dans l'enceinte 2, ce qui améliore le transfert thermique entre la paroi de confinement 4 échauffée par la vapeur présente dans la chambre d'expansion de vapeur 3 et les aliments présents dans l'enceinte 2. Tant que la pression à l'intérieur de la chambre d'expansion de vapeur 3 reste inférieure au seuil haut, l'élément chauffant 31 reste alimenté électriquement. Cette phase de fonctionnement est une phase de préchauffage, ou phase de montée en température. Lorsque la pression à l'intérieur de la chambre d'expansion de vapeur 3 dépasse le seuil haut, l'alimentation électrique de l'élément chauffant 31 est coupée jusqu'à ce que la pression à l'intérieur de la chambre d'expansion de vapeur 3 repasse en dessous du seuil bas, puis rétablie jusqu'à ce que la pression à l'intérieur de la chambre d'expansion de vapeur 3 repasse au dessus du seuil haut et ainsi de suite. Cette autre phase de fonctionnement est une phase de chauffe et/ou de cuisson, ou phase de régulation, utilisant la pression régnant à l'intérieur de la chambre d'expansion de vapeur 3 pour contrôler l'alimentation électrique de l'élément chauffant 31. Le contrôle de la pression de vapeur dans la chambre d'expansion de vapeur 3 permet d'éviter d'exercer une pression trop forte sur les aliments. Lorsque le support ajouré 50 est utilisé, les jus de cuisson peuvent être recueillis dans l'espace de récupération de jus 45 du réceptacle 40. Lorsque le temps de cuisson et/ou de chauffe des aliments souhaité est atteint, l'alimentation électrique de l'élément chauffant 31 est interrompue. Cette interruption peut être réalisée manuellement par l'utilisateur ou de manière automatique par une minuterie ou par un programme de cuisson. L'utilisateur peut alors ouvrir l'enceinte 2 pour retirer les aliments chauffés et/ou cuits. Si désiré, l'utilisateur peut saisir le réceptacle 40 par les poignées 41 s'étendant à l'extérieur de l'appareil, et le retirer de l'appareil, pour l'emporter sur la table.

A titre de variante, la paroi de confinement 4 n'est pas nécessairement réalisée entièrement en matériau souple élastiquement déformable. La paroi de confinement 4 peut être au moins partiellement réalisée en matériau souple élastiquement déformable. Notamment la paroi de confinement 4 peut comporter au moins une partie rigide, et/ou plusieurs parties ou portions de rigidité différente.

A titre de variante, la paroi de confinement 4 ne présente pas nécessairement une position de repos concave par rapport à l'enceinte 2. La paroi de confinement 4 peut notamment présenter une position de repos au moins partiellement concave par rapport à l'enceinte 2. La paroi de confinement 4 peut aussi venir au contact des aliments présents dans l'enceinte 2 avant que la vapeur soit admise dans la chambre d'expansion de vapeur 3.

A titre de variante, l'espace de récupération de jus 45 du réceptacle 40 n'est pas nécessairement annulaire.

A titre de variante, le réceptacle 40 n'est pas nécessairement amovible par rapport à un corps principal 10.

A titre de variante, le dispositif de production de vapeur 1 ne comporte pas nécessairement un élément chauffant 31 agencé dans le fond d'un réservoir d'eau 30. Le dispositif de production de vapeur 1 comporte une chaudière, tubulaire ou non, alimentée par un réservoir d'eau au moyen d'une pompe, la chaudière comprenant ou étant associée à un élément chauffant.

A titre de variante, le dispositif de production de vapeur 1 n'est pas nécessairement agencé dans le corps principal 10. Le dispostif de production de vapeur 1 peut notamment être agencé dans le couvercle 20.

A titre de variante, le chauffage du réceptacle 40 n'est pas nécessairement assuré par le dispositif de production de vapeur 1. Notamment, le dispositif de production de vapeur 1 n'est pas nécessairement disposé sous le réceptacle 40. Le dispositif de production de vapeur 1 peut par exemple être agencé latéralement par rapport à l'enceinte 2, si désiré dans le corps principal 10.

De préférence alors, le chauffage du réceptacle 40 est assuré par un dispositif électrique de chauffe indépendant du dispositif de production de vapeur 1. Le dispositif électrique de chauffe peut notamment comporter un élément chauffant électrique agencé sous le réceptacle 40. L'élément chauffant électrique peut par exemple être rapporté sous le réceptacle 40, ou appartenir à une plaque de chauffe électrique portant le réceptacle 40 amovible.

A titre de variante, le placage de la paroi de confinement 4 sur les aliments disposés dans le réceptacle 40 n'est pas nécessairement assuré uniquement par la vapeur admise dans la chambre d'expansion de vapeur 3. Le placage de la paroi de confinement 4 sur les aliments disposés dans le réceptacle 40 peut notamment être assuré au moins en partie par une pompe utilisée pour gonfler la chambre d'expansion de vapeur 3, et/ou pour aspirer l'air présent dans l'enceinte 2. Ces dispositions permettent de s'affranchir des phénomènes de condensation dans la chambre d'expansion de vapeur 3 et procurent un meilleur placage de la paroi de confinement 4 sur les aliments disposés dans le réceptacle 40. La pompe peut notamment être agencée dans

le corps principal 10, ou être portée par le couvercle 20.

A titre de variante, la ou les ouvertures d'admission 5 ne sont pas nécessairement agencées dans le réceptacle 40. La ou les ouvertures d'admission 5 peuvent notamment être agencées entre le réceptacle 40 et le couvercle 20, ou dans le couvercle 20. A titre de variante, l'enceinte 2 ne comporte pas nécessairement d'ouverture d'admission 5.

A titre de variante, le couvercle 20 n'est pas nécessairement monté pivotant par rapport au corps principal 10 selon un axe horizontal. Le couvercle 20 peut notamment être posé sur le corps principal 10, en particulier lorsque le dispositif de production de vapeur 1 est agencé dans le couvercle 20.

La présente invention n'est nullement limitée à l'exemple de réalisation décrit et à ses variantes, mais englobe de nombreuses modifications dans le cadre des revendications.

## Revendications

1. Appareil pour cuire et/ou chauffer des aliments, comportant une enceinte (2) comprenant un réceptacle (40) et un couvercle (20), et un dispositif de production de vapeur (1), **caractérisé en ce que** le couvercle (20) porte une chambre d'expansion de vapeur (3) alimentée en vapeur par le dispositif de production de vapeur (1), **en ce que** la chambre d'expansion de vapeur (3) comporte une paroi de confinement (4) délimitant une partie de l'enceinte (2), **en ce que** la paroi de confinement (4) est mobile par rapport au réceptacle (40) lorsque le couvercle (20) ferme l'enceinte (2), et **en ce que** l'appareil comporte une pompe utilisée pour gonfler la chambre d'expansion de vapeur (3) et/ou pour aspirer l'air présent dans l'enceinte (2).

2. Appareil pour cuire et/ou chauffer des aliments selon la revendication 1, **caractérisé en ce que** la paroi de confinement (4) est au moins partiellement réalisée en matériau souple élastiquement déformable.

3. Appareil pour cuire et/ou chauffer des aliments selon la revendication 2, **caractérisé en ce que** la paroi de confinement (4) présente une position de repos au moins partiellement rentrée à l'intérieur du couvercle.

4. Appareil pour cuire et/ou chauffer des aliments selon l'une des revendications 1 à 3, **caractérisé en ce que** le réceptacle (40) est porté par un corps principal (10).

5. Appareil pour cuire et/ou chauffer des aliments selon la revendication 4, **caractérisé en ce que** le réceptacle (40) est amovible par rapport au corps principal (10).

6. Appareil pour cuire et/ou chauffer des aliments selon l'une des revendications 4 ou 5, **caractérisé en ce que** le couvercle (20) est monté mobile par rapport au corps principal (10) entre une position relevée pour la mise en place des aliments dans le réceptacle (40) ou le retrait des aliments du réceptacle (40) et une position abaissée pour cuire et/ou chauffer les aliments disposés dans le réceptacle (40).

7. Appareil pour cuire et/ou chauffer des aliments selon l'une des revendications 4 à 6, **caractérisé en ce que** le dispositif de production de vapeur (1) est agencé dans le corps principal (10).

8. Appareil pour cuire et/ou chauffer des aliments selon l'une des revendications 1 à 7, **caractérisé en ce que** le dispositif de production de vapeur (1) comporte un réservoir d'eau (30) associé à un élément chauffant (31).

9. Appareil pour cuire et/ou chauffer des aliments selon l'une des revendications 1 à 8, **caractérisé en ce que** l'enceinte (2) comporte au moins une ouverture d'admission (5) communiquant avec le dispositif de production de vapeur (1) pour injecter de la vapeur dans l'enceinte (2).

10. Appareil pour cuire et/ou chauffer des aliments selon la revendication 9, **caractérisé en ce que** la ou les ouvertures d'admission (5) sont agencées dans le réceptacle (40).

11. Appareil pour cuire et/ou chauffer des aliments selon l'une des revendications 9 ou 10, **caractérisé en ce que** la paroi de confinement (4) déplacée par la vapeur présente dans la chambre d'expansion de vapeur (3) peut occuper au moins une position obturant la ou les ouvertures d'admission (5).

12. Appareil pour cuire et/ou chauffer des aliments selon l'une des revendications 1 à 11, **caractérisé en ce que** l'enceinte (2) comporte au moins une ouverture d'évacuation (6) communiquant avec l'extérieur de l'appareil.

13. Appareil pour cuire et/ou chauffer des aliments selon l'une des revendications 1 à 12, **caractérisé en ce qu'**il comporte des moyens de commande (7) pour piloter la production de vapeur du dispositif de production de vapeur (1) en fonction de la pression de vapeur régnant dans la chambre d'expansion de vapeur (3).

14. Appareil pour cuire et/ou chauffer des aliments selon l'une des revendications 4 à 7, **caractérisé en ce que** la pompe est agencée dans le corps principal (10).

15. Appareil pour cuire et/ou chauffer des aliments selon l'une des revendications 1 à 13, **caractérisé en ce que** la pompe est portée par le couvercle (20).

## Patentansprüche

1. Gerät zum Kochen und/oder Erhitzen von Lebensmitteln, aufweisend eine Kammer (2), die einen Behälter (40) und einen Deckel (20) umfasst, und eine Dampferzeugungsvorrichtung (1), **dadurch gekennzeichnet, dass** der Deckel (20) eine Dampfexpansionskammer (3) trägt, die von der Dampferzeugungsvorrichtung (1) mit Dampf versorgt wird, dass die Dampfexpansionskammer (3) eine Einschließungswand (4) aufweist, die einen Teil der Kammer (2) begrenzt, dass die Einschließungswand (4) relativ zu dem Behälter (40) beweglich ist, wenn der Deckel (20) die Kammer (2) verschließt, und dass das Gerät eine Pumpe aufweist, die zum Aufblasen der Dampfexpansionskammer (3) und/oder zum Absaugen der in der Kammer (2) vorhandenen Luft verwendet wird.

2. Gerät zum Kochen und/oder Erhitzen von Lebensmitteln nach Anspruch 1, **dadurch gekennzeichnet, dass** die Einschließungswand (4) zumindest teilweise aus einem elastisch verformbaren flexiblen Material besteht.

3. Gerät zum Kochen und/oder Erhitzen von Lebensmitteln nach Anspruch 2, **dadurch gekennzeichnet, dass** die Einschließungswand (4) eine in das Innere des Deckels zumindest teilweise zurückgezogene Ruheposition vorweist.

4. Gerät zum Kochen und/oder Erhitzen von Lebensmitteln nach einem der Ansprüche 1 bis 3, **dadurch gekennzeichnet, dass** der Behälter (40) von einem Hauptkörper (10) getragen wird.

5. Gerät zum Kochen und/oder Erhitzen von Nahrungsmitteln nach Anspruch 4, **dadurch gekennzeichnet, dass** der Behälter (40) relativ zum Hauptkörper (10) abnehmbar ist.

6. Gerät zum Kochen und/oder Erhitzen von Lebensmitteln nach einem der Ansprüche 4 oder 5, **dadurch gekennzeichnet, dass** der Deckel (20) relativ zu dem Hauptkörper (10) zwischen einer angehobenen Position zum Einbringen von Lebensmitteln in den Behälter (40) oder Entnehmen von Lebensmitteln aus dem Behälter (40) und einer abgesenkten Position zum Kochen und/oder Erhitzen der in dem Behälter (40) befindlichen Lebensmittel beweglich angebracht ist.

7. Gerät zum Kochen und/oder Erhitzen von Lebensmitteln nach einem der Ansprüche 4 bis 6, **dadurch gekennzeichnet, dass** die Dampferzeugungsvorrichtung (1) in dem Hauptkörper (10) angeordnet ist.

8. Gerät zum Kochen und/oder Erhitzen von Lebensmitteln nach einem der Ansprüche 1 bis 7, **dadurch gekennzeichnet, dass** die Dampferzeugungsvorrichtung (1) einen einem Heizelement (31) zugeordneten Wassertank (30) aufweist.

9. Gerät zum Kochen und/oder Erhitzen von Lebensmitteln nach einem der Ansprüche 1 bis 8, **dadurch gekennzeichnet, dass** die Kammer (2) mindestens eine Einlassöffnung (5) aufweist, die mit der Dampferzeugungsvorrichtung (1) in Verbindung steht, um Dampf in die Kammer (2) einzuspritzen.

10. Gerät zum Kochen und/oder Erhitzen von Lebensmitteln nach Anspruch 9, **dadurch gekennzeichnet, dass** die Einlassöffnung(en) (5) in dem Behälter (40) angeordnet ist bzw. sind.

11. Gerät zum Kochen und/oder Erhitzen von Lebensmitteln nach einem der Ansprüche 9 oder 10, **dadurch gekennzeichnet, dass** die Einschließungswand (4), die von dem in der Dampfexpansionskammer (3) vorhandenen Dampf verschoben ist, zumindest eine Position einnehmen kann, die die Einlassöffnung(en) (5) verschließt.

12. Gerät zum Kochen und/oder Erhitzen von Lebensmitteln nach einem der Ansprüche 1 bis 11, **dadurch gekennzeichnet, dass** die Kammer (2) mindestens eine mit dem Äußeren des Geräts in Verbindung stehende Auslassöffnung (6) aufweist.

13. Gerät zum Kochen und/oder Erhitzen von Lebensmitteln nach einem der Ansprüche 1 bis 12, **dadurch gekennzeichnet, dass** es Steuermittel (7) zum Lenken der Dampferzeugung der Dampferzeugungsvorrichtung (1) als Funktion des in der Dampfexpansionskammer (3) herrschenden Dampfdrucks aufweist.

14. Gerät zum Kochen und/oder Erhitzen von Lebensmitteln nach einem der Ansprüche 4 bis 7, **dadurch gekennzeichnet, dass** die Pumpe in dem Hauptkörper (10) angeordnet ist.

15. Gerät zum Kochen und/oder Erhitzen von Lebensmitteln nach einem der Ansprüche 1 bis 13, **dadurch gekennzeichnet, dass** die Pumpe von dem Deckel (20) getragen wird.

## Claims

1. Appliance for cooking and/or heating food, comprising an enclosure (2) comprising a container (40) and a cover (20), and a device for producing steam (1), **characterised in that** the cover (20) carries a steam expansion chamber (3) supplied with steam by the device for producing steam (1), **in that** the steam expansion chamber (3) includes a containment wall (4) that delimits a portion of the enclosure (2), **in that** the containment wall (4) is mobile with respect to the container (40) when the cover (20) closes the enclosure (2), and **in that** the appliance includes a pump used to inflate the steam expansion chamber (3) and/or to aspirate the air present in the enclosure (2).

2. Appliance for cooking and/or heating food according to claim 1, **characterised in that** the containment wall (4) is at least partially made from an elastically deformable flexible material.

3. Appliance for cooking and/or heating food according to claim 2, **characterised in that** the containment wall (4) has an idle position at least partially retracted inside the cover.

4. Appliance for cooking and/or heating food according to one of claims 1 to 3, **characterised in that** the container (40) is carried by a main body (10).

5. Appliance for cooking and/or heating food according to claim 4, **characterised in that** the container (40) is removable with respect to the main body (10).

6. Appliance for cooking and/or heating food according to one of claims 4 or 5, **characterised in that** the cover (20) is movably mounted with respect to the main body (10) between a raised position for the setting in place of food in the container (40) or the removal of food from the container (40) and a lowered position for cooking and/or heating the food placed in the container (40).

7. Appliance for cooking and/or heating food according to one of claims 4 to 6, **characterised in that** the device for producing steam (1) is arranged in the main body (10).

8. Appliance for cooking and/or heating food according to one of claims 1 to 7, **characterised in that** the device for producing steam (1) includes a reservoir of water (30) associated with a heating element (31).

9. Appliance for cooking and/or heating food according to one of claims 1 to 8, **characterised in that** the enclosure (2) includes at least one intake opening (5) that communicates with the device for producing steam (1) in order to inject steam in the enclosure (2).

10. Appliance for cooking and/or heating food according to claim 9, **characterised in that** the intake opening or openings (5) are arranged in the container (40).

11. Appliance for cooking and/or heating food according to one of claims 9 or 10, **characterised in that** the containment wall (4) displaced by the steam present in the steam expansion chamber (3) can occupy at least one position that closes off the intake opening or openings (5).

12. Appliance for cooking and/or heating food according to one of claims 1 to 11, **characterised in that** the enclosure (2) includes at least one discharge opening (6) that communicated with the outside of the appliance.

13. Appliance for cooking and/or heating food according to one of claims 1 to 12, **characterised in that** it includes means for controlling (7) for controlling the production of steam of the device for producing steam (1) according to the steam pressure in the steam expansion chamber (3).

14. Appliance for cooking and/or heating food according to one of claims 4 to 7, **characterised in that** the pump is arranged in the main body (10).

15. Appliance for cooking and/or heating food according to one of claims 1 to 13, **characterised in that** the pump is carried by the cover (20).
